# EUROPÄISCHE PATENTSCHRIFT

(11) **EP 3 124 818 B1**
(45) Veröffentlichungstag und Bekanntmachung des Hinweises auf die Patenterteilung: **05.06.2019**
(21) Anmeldenummer: 15769794.7
(22) Anmeldetag: 09.02.2015
(51) Int. Cl.: F16D 48/02, F16D 48/06, B60T 7/02

(54) **HYDRAULISCHER STEUERMECHANISMUS, KUPPLUNGSSYSTEM UND KRAFTFAHRZEUGBREMSSYSTEM**
HYDRAULIC CONTROL MECHANISM, CLUTCH SYSTEM AND AUTOMOTIVE BRAKE SYSTEM
MÉCANISME DE COMMANDE HYDRAULIQUE, SYSTÈME D'EMBRAYAGE ET SYSTÈME DE FREIN DE VÉHICULE AUTOMOBILE

(30) Priorität: 28.03.2014 CN 201410123956
(43) Veröffentlichungstag der Anmeldung: 01.02.2017
(73) Patentinhaber: Schaeffler Technologies AG & Co. KG, 91074 Herzogenaurach (DE)
(72) Erfinder: HUANG, Chao, Shanghai 201804 (CN); LI, Linlin, Shanghai 201804 (CN); LI, Zhe, Shanghai 201804 (CN)
(86) Internationale Anmeldenummer: PCT/CN2015/072525
(87) Internationale Veröffentlichungsnummer: WO 2015/143957

(56) Entgegenhaltungen:
- CN-A- 1 877 156
- CN-A- 101 813 142
- CN-Y- 201 192 984
- DE-A1- 4 121 016
- DE-A1-102004 043 037
- DE-T2- 69 836 894
- IT-B- 1 128 888
- US-B2- 6 655 138

## Beschreibung

Diese Erfindung betrifft das Gebiet der Fahrzeugtechnik und betrifft insbesondere eine hydraulische Betätigungsvorrichtung, ein Kupplungssystem sowie ein Fahrzeugbremssystem.

Nach dem Stand der Technik werden bei durch eine Person gesteuerten Kupplungsbetätigungsvorrichtungen und Fahrzeugbremsbetätigungsvorrichtungen ein Ausrücken und Schließen der Kupplung sowie ein Bremsen des Fahrzeugs jeweils durch die Fußsteuerung von entsprechenden Pedalen realisiert.

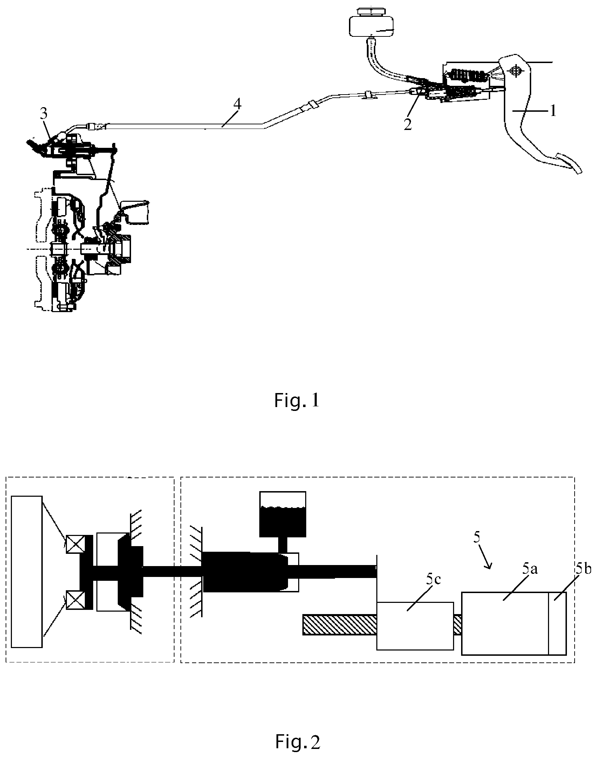

Vorhandene durch eine Person gesteuerte Kupplungsbetätigungsvorrichtungen umfassen: wie Fig. 1 zeigt, ein Pedal 1, einen Geberzylinder 2, dessen Schubstange mit dem Pedal 1 verbunden ist, sowie einen Arbeitszylinder 3, der durch ein Hydraulikrohr 4 mit dem Geberzylinder 2 verbunden ist. Wenn die Kupplung ausrücken soll, tritt der Fahrer das Pedal 1, um für das Ausrücken der Kupplung eine Kraftquelle bereitzustellen, das Pedal 1 treibt die Schubstange des Geberzylinders 2 zur Bewegung an, so dass das Hydrauliköl im Geberzylinder 2 über das Hydraulikrohr 4 zum Arbeitszylinder 3 fließt und das Ausrücken der Kupplung realisiert wird; und wenn die Kupplung schließen soll, lässt der Fahrer langsam das Pedal 1 los, so dass das Hydrauliköl im Arbeitszylinder 3 über das Hydraulikrohr 4 zum Geberzylinder 2 fließt und ein Schließen der Kupplung realisiert wird.

Da der Fahrer jedoch nur mittels der Form der Fußsteuerung des Pedals das Ausrücken und Schließen der Kupplung realisieren kann, besteht bei derzeitigen durch eine Person gesteuerten Kupplungsbetätigungsvorrichtungen das Problem, dass eine hohe Arbeitsintensität des Fahrers erforderlich ist. Vor allem bei Verkehrssituationen mit vielen Staus muss der Fahrer sehr häufig das Pedal treten und loslassen, was dieses Problem weiter verschärft.

Vorhandene durch eine Person gesteuerte Fahrzeugbremsbetätigungsvorrichtungen umfassen: ein Pedal, einen Geberzylinder, dessen Schubstange mit dem Pedal verbunden ist, sowie einen Arbeitszylinder, der durch ein Hydraulikrohr mit dem Geberzylinder verbunden ist. Wenn das Fahrzeug bremsen soll, tritt der Fahrer das Pedal, um für das Bremsen des Fahrzeugs eine Kraftquelle bereitzustellen, und das Pedal treibt die Schubstange des Geberzylinders zur Bewegung an, so dass das Hydrauliköl im Geberzylinder über ein Hydraulikrohr zum Arbeitszylinder fließt und das Bremsen des Fahrzeugs realisiert wird.

Da der Fahrer jedoch nur mittels der Form der Fußsteuerung des Pedals das Bremsen des Fahrzeugs realisieren kann, besteht bei derzeitigen durch eine Person gesteuerten Fahrzeugbremsbetätigungsvorrichtungen ebenfalls das Problem, dass die Arbeitsintensität des Fahrers erhöht wird.

Außerdem bestehen bei durch eine Person gesteuerten Kupplungsbetätigungsvorrichtungen noch folgende Probleme: Nachdem die Kupplung eine Zeit lang verwendet wurde, muss der Fahrer aufgrund des Verschleißes der Kupplungsscheibe (clutch disk), die Pedalkraft erhöhen, ehe die Kupplung zum Ausrücken veranlasst werden kann, wodurch die Arbeitsintensität des Fahrers erhöht wird. In der Kupplung wird eine Membranfeder verwendet, was zur Folge hat, dass sich die Pedalkraft, die der Fahrer ausübt, um die Kupplung zum Ausrücken zu veranlassen, in folgender Weise ändert: In der ersten Phase wird die Pedalkraft allmählich größer bis zu einem Maximalwert, in der zweiten Phase wird die Pedalkraft vom Maximalwert ausgehend allmählich kleiner, und da das Gefälle der Pedalkraft in der zweiten Phase relativ hoch ist, kann der Fahrer gegebenenfalls ein deutliches Gefühl haben, ins Leere zu treten.

Um das Problem der erhöhten Arbeitsintensität des Fahrers zu lösen, das bei derzeitigen durch eine Person gesteuerten Kupplungsbetätigungsvorrichtungen besteht, wird nach dem Stand der Technik eine automatisch gesteuerte Kupplungsbetätigungsvorrichtung vorgelegt, wobei die Unterschiede zwischen dieser Betätigungsvorrichtung und der vorstehenden Betätigungsvorrichtung in Folgendem bestehen: Wie Fig. 2 zeigt, ist bei ersterer kein Pedal angeordnet, sondern es ist eine Antriebsvorrichtung 5 angeordnet, die für das Ausrücken und Schließen der Kupplung die Kraftquelle bereitstellt. Die Antriebsvorrichtung 5 treibt direkt die Schubstange des Geberzylinders zur Bewegung an und realisiert im Weiteren ein automatisches Ausrücken und Schließen der Kupplung. Genauer ist es so, dass die Antriebsvorrichtung 5 einen Elektromotor 5a, eine Steuereinheit 5b zur Steuerung des Betriebs des Elektromotors 5a sowie eine mit dem Elektromotor 5a gekoppelte Gewindespindelvorrichtung 5c zum Umwandeln der vom Elektromotor 5a ausgegebenen Drehbewegung in eine Linearbewegung umfasst und die Gewindespindelvorrichtung 5c die Schubstange des Geberzylinders in Bewegung versetzt.

Diese automatisch gesteuerte Kupplungsbetätigungsvorrichtung kann jedoch wiederum folgendes Problem aufwerfen: Sobald die Antriebsvorrichtung defekt ist, ist es unmöglich, die Kupplungsbetätigungsvorrichtung weiter zu verwenden, so dass die Funktionssicherheit der Kupplungsbetätigungsvorrichtung nicht sehr hoch ist.

Aus der aus dem Stand der Technik bekannten Druckschrift DE 698 36 894 T2 ist eine hydraulische Betätigungsvorrichtung nach den Merkmalen des Oberbegriffs des Patentanspruchs 1 bekannt.

Bei dem von dieser Erfindung zu lösenden Problem handelt es sich um: das Problem, dass für derzeitige durch eine Person gesteuerte Kupplungsbetätigungsvorrichtungen und Fahrzeugbremsbetätigungsvorrichtungen eine erhöhte Arbeitsintensität des Fahrers erforderlich ist.

Bei einem weiteren von dieser Erfindung zu lösenden Problem handelt es sich um folgendes: Nachdem die Kupplung eine Zeit lang verwendet wurde, ist bei der Verwendung von derzeitigen durch eine Person gesteuerten Kupplungsbetätigungsvorrichtungen für das Ausrücken der Kupplung die vom Fahrer ausgeübte Pedalkraft relativ hoch, und außerdem kann der Fahrer deutlich das Gefühl haben, ins Leere zu treten.

Bei einem weiteren von dieser Erfindung zu lösenden Problem handelt es sich um: das bei jetzigen automatisch gesteuerten Kupplungsbetätigungsvorrichtungen bestehende Problem, dass die Funktionssicherheit nicht sehr hoch ist.

Um die genannten Probleme zu lösen, stellt diese Erfindung eine hydraulische Betätigungsvorrichtung vor, die einen Geberzylinder, einen mit dem Geberzylinder verbundenen Flüssigkeitsbehälter, einen Arbeitszylinder sowie ein mit der Schubstange des Geberzylinders verbundenes Pedal umfasst;
die außerdem eine automatische hydraulische Antriebseinrichtung umfasst, und die automatische hydraulische Antriebseinrichtung umfasst:
einen Ölzylinder, wobei am Ölzylinder mit dem Innenhohlraum des Ölzylinders verbunden eine erste und eine zweite Ölöffnung vorgesehen sind, die erste Ölöffnung durch ein Hydraulikrohr mit dem Geberzylinder verbunden ist, die zweite Ölöffnung durch ein Hydraulikrohr mit dem Arbeitszylinder verbunden ist, von der ersten und zweiten Ölöffnung zumindest eine Ölöffnung sich an der Zylinderwand des Ölzylinders befindet;
einen beweglich im Innenhohlraum befindlichen ersten Kolben, wobei der erste Kolben mit der Zylinderwand einen dichten Kontakt hat und die erste und die zweite Ölöffnung in Bewegungsrichtung des ersten Kolbens einen Abstand aufweisen;
eine Antriebsvorrichtung für ein Antreiben des ersten Kolbens zum Bewegen im Innenhohlraum;
eine Steuereinheit, die dafür verwendet wird, dass:
   beim Empfang von Befehlen der Steuerung durch eine Person die Antriebsvorrichtung zum Antreiben des ersten Kolbens gesteuert wird, so dass dieser unbeweglich eine Position beibehält, die eine Verbindung der ersten und der zweiten Ölöffnung veranlasst; sowie
   beim Empfang von Befehlen der automatischen Steuerung die Antriebsvorrichtung zum automatischen Antreiben des ersten Kolbens gemäß dem voreingestellten Programm gesteuert wird, so dass dieser sich in einem Positionsbereich bewegt, der veranlasst, dass die erste und die zweite Ölöffnung nicht verbunden sind.

Optional befindet sich die erste Ölöffnung an der Zylinderwand und umfasst die automatische hydraulische Antriebseinrichtung außerdem:
eine Stützsäule, deren eines Ende mit der axialen Endfläche des ersten Kolbens fest verbunden ist, wobei der erste Kolben dazu dient, die axiale Endfläche der Stützsäule rückseitig zur ersten und zur zweiten Ölöffnung gerichtet fest anzuordnen, wenn der erste Kolben unbeweglich eine Position beibehält, die eine Verbindung der ersten und zweiten Ölöffnung veranlasst;
einen Sockel, der am anderen Ende der Stützsäule fest angeordnet ist und sich in radialer Richtung der Stützsäule nach außen erstreckt;
einen beweglich auf die Stützsäule aufgesetzten zweiten Kolben, wobei der zweite Kolben mit der Zylinderwand und der Stützsäule einen dichten Kontakt hat und der zweite Kolben, der erste Kolben und die Zylinderwand durch Umschließen eine Hydraulikkammer bilden;
ein zwischen dem zweiten Kolben und dem Sockel befindliches elastisches Teil, wobei das elastische Teil in Bewegungsrichtung des ersten Kolbens einen komprimierten Zustand aufweist;
wenn die Antriebsvorrichtung den ersten Kolben antreibt, so dass dieser sich in einem Positionsbereich bewegt, der veranlasst, dass die erste und zweite Ölöffnung nicht verbunden sind, sind die Hydraulikkammer und die erste Ölöffnung miteinander verbunden.

Optional umfasst sie außerdem: einen ersten Sensor für ein Überwachen, ob das Pedal getreten oder losgelassen wird;
wird die Steuereinheit dafür verwendet, dass: beim Empfang von Befehlen der halbautomatischen Steuerung sowie von Befehlen, die vom ersten Sensor darüber ausgegeben werden, ob das Pedal getreten oder losgelassen wird, die Antriebsvorrichtung zum Antreiben des ersten Kolbens gemäß dem Befehl zum Treten oder Loslassen gesteuert wird, so dass dieser sich in einem Positionsbereich bewegt, der veranlasst, dass die erste Ölöffnung und die zweite Ölöffnung nicht verbunden sind.

Optional handelt es sich bei dem elastischen Teil um eine Schraubenfeder.

Optional besteht zwischen der äußeren Umfangsfläche des zweiten Kolbens und der Kolbenwand ein radialer Zwischenraum, weist die äußere Umfangsfläche des zweiten Kolbens eine zweite ringförmige Dichtungsnut auf, welche die Achse des zweiten Kolbens umläuft, und nimmt die zweite ringförmige Dichtungsnut einen zweiten Dichtungsring auf, der mit der Zylinderwand dichten Kontakt hat.

Optional wird die Steuereinheit außerdem dafür verwendet, dass: beim Empfang von Befehlen für ein Kompensieren von Hydrauliköl die Antriebsvorrichtung zum Antreiben des ersten Kolbens gesteuert wird, so dass dieser unbeweglich eine Position beibehält, die eine Verbindung der zweiten Ölöffnung und der Hydraulikkammer mit der ersten Ölöffnung veranlasst.

Optional besteht zwischen der Umfangsfläche des ersten Kolbens und der Kolbenwand ein radialer Zwischenraum, weist die Umfangsfläche des ersten Kolbens eine erste ringförmige Dichtungsnut auf, welche die Achse des ersten Kolbens umläuft, und nimmt die erste ringförmige Dichtungsnut einen ersten Dichtungsring auf, der mit der Zylinderwand dichten Kontakt hat.

Optional umfasst sie außerdem: einen zweiten Sensor für ein Überwachen der Position des ersten Kolbens und die Kommunikation mit der Steuereinheit.

Optional befindet sich von der ersten und zweiten Ölöffnung eine an der Zylinderwand und befindet sich die andere am Zylinderdeckel des Ölzylinders; oder befinden sich die erste und die zweite Ölöffnung an der Zylinderwand.

Optional umfasst die Antriebsvorrichtung: einen Elektromotor sowie eine Gewindespindelvorrichtung, die dafür verwendet wird, die vom Elektromotor ausgegebene Drehbewegung in eine Linearbewegung umzuwandeln, wobei die Gewindespindelvorrichtung eine Gewindespindel und einen auf die Gewindespindel aufgesetzten Außenring umfasst, der Elektromotor den Außenring zur Drehung antreibt und die Gewindespindel mit dem ersten Kolben fest verbunden ist.

Optional umfasst die Antriebsvorrichtung außerdem ein Untersetzungsgetriebe, das mit der Ausgangswelle des Elektromotors gekoppelt ist, und treibt der Elektromotor durch das Untersetzungsgetriebe den Außenring zur Drehung an.

Optional steuert die Steuereinheit gemäß der Drehzahl des Elektromotors die Bewegungsdistanz des ersten Kolbens.

Optional handelt es sich bei der hydraulischen Betätigungsvorrichtung um eine Kupplungsbetätigungsvorrichtung.

Optional handelt es sich bei der hydraulischen Betätigungsvorrichtung um eine Fahrzeugbremsbetätigungsvorrichtung.

Außerdem stellt diese Erfindung ein Kupplungssystem bereit, das umfasst:
eine Kupplung;
eine beliebige vorstehend beschriebene hydraulische Betätigungsvorrichtung, wobei es sich bei der hydraulischen Betätigungsvorrichtung um eine Kupplungsbetätigungsvorrichtung handelt, die für ein Steuern des Ausrückens und Schließens einer Kupplung verwendet wird.

Außerdem stellt diese Erfindung ein Fahrzeugbremssystem bereit, das umfasst: eine beliebige vorstehend beschriebene hydraulische Betätigungsvorrichtung, wobei es sich bei der hydraulischen Betätigungsvorrichtung um eine Fahrzeugbremsbetätigungsvorrichtung handelt.

Im Vergleich zum Stand der Technik weist das technische Konzept dieser Erfindung folgende Vorteile auf:
Bei der Verwendung der hydraulischen Betätigungsvorrichtung als Kupplungsbetätigungsvorrichtung oder Fahrzeugbremsbetätigungsvorrichtung wird durch Zufügen einer automatischen hydraulischen Antriebseinrichtung in der hydraulischen Betätigungsvorrichtung bewirkt, dass der Fahrer sowohl den Modus der Steuerung durch eine Person als auch den automatischen Steuermodus für das Steuern des Ausrückens und Schließens der Kupplung oder des Bremsens des Fahrzeugs wählen kann. Auf diese Weise kann der Fahrer, sobald die Antriebsvorrichtung defekt ist, dennoch den Modus der Steuerung durch eine Person wählen, um das Ausrücken und Schließen der Kupplung oder das Bremsen des Fahrzeugs zu steuern. Außerdem kann der Fahrer auch den automatischen Steuermodus wählen, um das Ausrücken und Schließen der Kupplung oder das Bremsen des Fahrzeugs zu steuern, damit die Arbeitsintensität des Fahrers verringert wird.

Die Erfindung wird anhand von Zeichnungen näher erläutert.

Es zeigen:
Fig. 1 eine schematische Darstellung des Aufbaus eines derzeitigen ersten Kupplungssystems,
Fig. 2 eine schematische Darstellung des Aufbaus eines derzeitigen zweiten Kupplungssystems,
Fig. 3 eine schematische Darstellung des Aufbaus eines Kupplungssystems in einem erfindungsgemäßen Ausführungsbeispiel,
Fig. 4 eine schematische Darstellung des Aufbaus einer automatischen hydraulischen Antriebseinrichtung in Fig. 3,
Fig. 5 eine schematische Darstellung des Aufbaus eines Kupplungssystems im Betriebsmodus der Steuerung durch eine Person in einem erfindungsgemäßen Ausführungsbeispiel, und
Fig. 6 eine schematische Darstellung des Aufbaus eines Kupplungssystems im Betriebsmodus der automatischen Steuerung oder im Betriebsmodus der halbautomatischen Steuerung in einem erfindungsgemäßen Ausführungsbeispiel.

Für ein klareres und leichteres Verständnis der oben beschriebenen Aufgaben, Merkmale und Vorteile dieser Erfindung werden nachfolgend in Verbindung mit den Zeichnungen die konkreten Ausführungsbeispiele dieser Erfindung detailliert beschrieben.

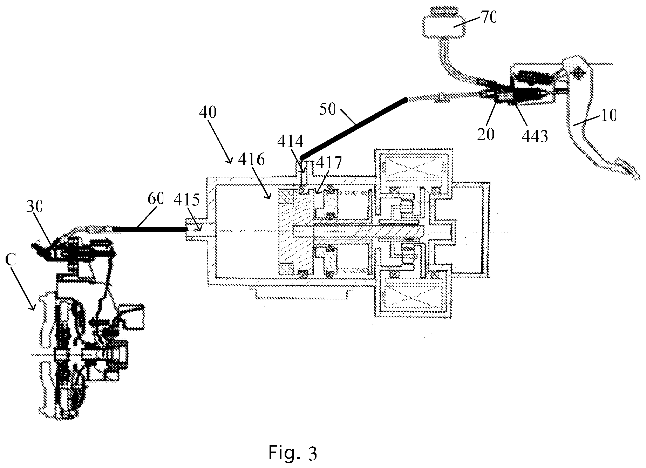

Wie in Fig. 3 dargestellt, umfasst das Kupplungssystem dieses Ausführungsbeispiels: eine Kupplung C sowie eine hydraulische Betätigungsvorrichtung für ein Steuern des Ausrückens und Schließens der Kupplung C, wobei es sich bei der hydraulischen Betätigungsvorrichtung um eine Kupplungsbetätigungsvorrichtung handelt. Die hydraulische Betätigungsvorrichtung umfasst: einen Geberzylinder 20, einen mit dem Geberzylinder 20 verbundenen Flüssigkeitsbehälter 70, einen Arbeitszylinder 30, ein mit der Schubstange des Geberzylinders 20 verbundenes Pedal 10 sowie eine automatische hydraulische Antriebseinrichtung 40.

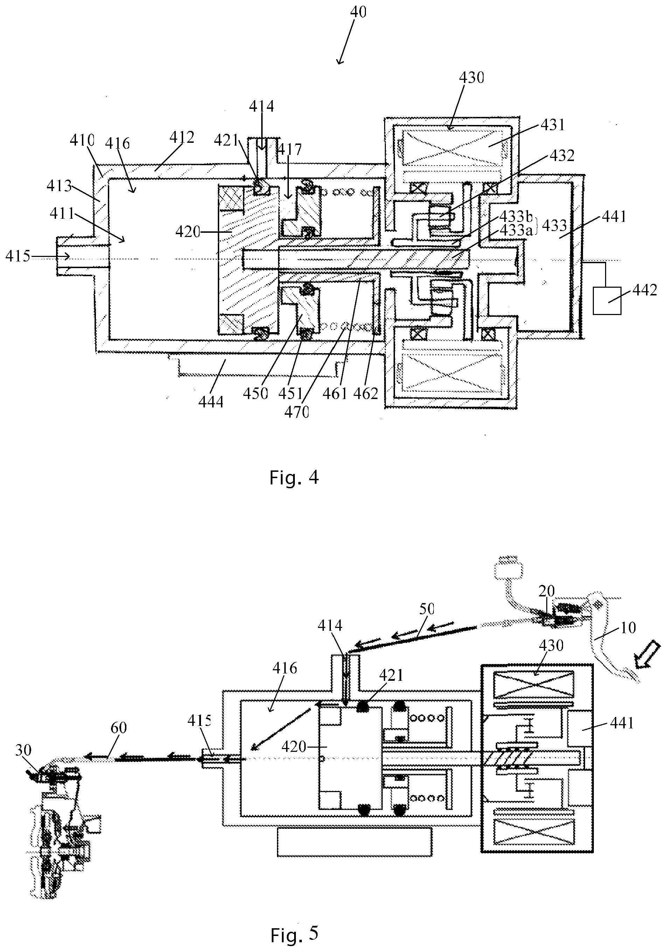

Wie Fig. 4 zeigt, umfasst die automatische hydraulische Antriebseinrichtung 40: einen Ölzylinder 410; einen beweglich im Innenhohlraum 411 des Ölzylinders 410 befindlichen ersten Kolben 420; eine Antriebsvorrichtung 430 für ein Antreiben des ersten Kolbens 420 zum Bewegen im Innenhohlraum 411; eine Steuereinheit 441 zum Steuern des Betriebs der Antriebsvorrichtung 430; eine Stützsäule 461, deren eines Ende mit der axialen Endfläche des ersten Kolbens 420 fest verbunden ist; einen Sockel 462, der am anderen Ende der Stützsäule 461 fest angeordnet ist und sich in radialer Richtung der Stützsäule 461 nach außen erstreckt; einen beweglich auf die Stützsäule 461 aufgesetzten zweiten Kolben 450; ein zwischen dem zweiten Kolben 450 und dem Sockel 462 befindliches elastisches Teil 470. Dabei gilt Folgendes:
Am Ölzylinder 410 sind mit dem Innenhohlraum 411 verbunden eine erste Ölöffnung 414 und eine zweite Ölöffnung 415 vorgesehen, wobei, wie Fig. 3 zeigt, die erste Ölöffnung 414 durch ein Hydraulikrohr 50 mit dem Geberzylinder 20 verbunden ist und die zweite Ölöffnung 415 durch ein Hydraulikrohr 60 mit dem Arbeitszylinder 30 verbunden ist. In diesem Ausführungsbeispiel befindet sich die erste Ölöffnung 414 an der Zylinderwand 412 des Ölzylinders 410, befindet sich die zweite Ölöffnung 415 am Zylinderdeckel 413 des Ölzylinders 410. Der erste Kolben 420 dient zum festen Anordnen der axialen Endfläche der Stützsäule 461 rückseitig zur ersten Ölöffnung 414 und zur zweiten Ölöffnung 415 gerichtet.

Der erste Kolben 420 hat dichten Kontakt mit der Zylinderwand 412. In diesem Ausführungsbeispiel besteht zwischen der Umfangsfläche des ersten Kolbens 420 und der Kolbenwand 412 ein radialer Zwischenraum, weist die Umfangsfläche des ersten Kolbens 420 eine erste ringförmige Dichtungsnut (nicht bezeichnet) auf, welche die Achse des ersten Kolbens 420 umläuft, nimmt die erste ringförmige Dichtungsnut einen ersten Dichtungsring 421 auf, der mit der Zylinderwand 412 dichten Kontakt hat, kann mittels des ersten Dichtungsrings 421 der dichte Kontakt des ersten Kolbens 420 mit der Zylinderwand 412 realisiert werden, wird zwischen dem ersten Kolben 420, dem Zylinderdeckel 413 sowie der Zylinderwand 412 durch Umschließen eine Hydraulikkammer 416 gebildet. In anderen Ausführungsbeispielen kann auch auf andere Art und Weise der dichte Kontakt des ersten Kolbens 420 mit der Zylinderwand 412 realisiert werden.

Der zweite Kolben 450 hat mit der Zylinderwand 412 und der Stützsäule 461 einen dichten Kontakt, und der zweite Kolben 450, der erste Kolben 420 und die Zylinderwand 412 bilden durch Umschließen die Hydraulikkammer 417. In diesem Ausführungsbeispiel besteht zwischen der äußeren Umfangsfläche des zweiten Kolbens 450 und der Kolbenwand 412 ein radialer Zwischenraum, weist die äußere Umfangsfläche des zweiten Kolbens 450 eine zweite ringförmige Dichtungsnut (nicht bezeichnet) auf, welche die Achse des zweiten Kolbens 450 umläuft, nimmt die zweite ringförmige Dichtungsnut einen zweiten Dichtungsring 451 auf, der mit der Zylinderwand 412 dichten Kontakt hat, und kann mittels des zweiten Dichtungsrings 451 der dichte Kontakt des zweiten Kolbens 450 mit der Zylinderwand 412 realisiert werden. In anderen Ausführungsbeispielen kann auch auf andere Art und Weise der dichte Kontakt des zweiten Kolbens 450 mit der Zylinderwand 412 realisiert werden.

Zwischen der inneren Umfangsfläche des zweiten Kolbens 450, welche die Stützsäule 461 umläuft, und der Stützsäule 461 besteht ein radialer Zwischenraum, die innere Umfangsfläche des zweiten Kolbens 450 weist eine dritte ringförmige Dichtungsnut (nicht bezeichnet) auf, die dritte ringförmige Dichtungsnut nimmt einen dritten Dichtungsring (nicht bezeichnet) auf, der mit der Stützsäule 461 dichten Kontakt hat, und mittels des dritten Dichtungsrings kann der dichte Kontakt des zweiten Kolbens 450 mit der Stützsäule 461 realisiert werden. In anderen Ausführungsbeispielen kann auch auf andere Art und Weise der dichte Kontakt des zweiten Kolbens 450 mit der Stützsäule 461 realisiert werden.

Das elastische Teil 470 weist in Bewegungsrichtung des ersten Kolbens 420 einen komprimierten Zustand auf. In diesem Ausführungsbeispiel handelt es sich bei dem elastischen Teil 470 um eine Schraubenfeder, in anderen Ausführungsbeispielen kann es sich bei dem elastischen Teil 470 auch um ein anderes elastisches Teil handeln, das eine teleskopische Verformbarkeit aufweist.

Wie Fig. 3 zeigt, umfasst die automatische hydraulische Antriebseinrichtung 40 außerdem: einen ersten Sensor 443 für das Überwachen, ob das Pedal 10 getreten oder losgelassen wird. In diesem Ausführungsbeispiel befindet sich der erste Sensor 443 am Geberzylinder 20, um indirekt zu überwachen, ob das Pedal 10 getreten oder losgelassen wird. In anderen Ausführungsbeispielen kann sich der erste Sensor 443 auch am Pedal 10 befinden, um direkt zu überwachen, ob das Pedal 10 getreten oder losgelassen wird.

Unter der Wirkung der automatischen hydraulischen Antriebseinrichtung 40 weist die Kupplungsbetätigungsvorrichtung dieses Ausführungsbeispiels drei Betriebsmodi auf:
1. Betriebsmodus der Steuerung durch eine Person: Der Fahrer steuert durch den Fuß das Pedal 10, um das Ausrücken und Schließen der Kupplung zu realisieren. Wenn die Kupplung ausrücken soll, tritt der Fahrer das Pedal 10, um für das Ausrücken der Kupplung eine Kraftquelle bereitzustellen, und wenn die Kupplung schließen soll, lässt der Fahrer langsam das Pedal 10 los.
2. Betriebsmodus der automatischen Steuerung: Wenn das Ausrücken und Schließen der Kupplung gesteuert wird, wird von der Antriebsvorrichtung 430 für das Ausrücken und Schließen der Kupplung eine Kraftquelle bereitgestellt. In diesem Betriebsmodus kann der Fahrer das Pedal 10 treten oder loslassen, jedoch ist die Wirkung der Aktion des Tretens oder Loslassens des Pedals 10 nicht identisch mit der Wirkung im Betriebsmodus der Steuerung durch eine Person und dient lediglich dazu, die Betriebsgewohnheiten des Fahrers für das Treten oder Loslassen des Pedals beim Steuern des Ausrückens und Schließens der Kupplung zu befriedigen, ohne eine reale operative Bedeutung dafür zu haben, ob das Ausrücken und Schließen für die Kupplung realisiert werden können.
3. Betriebsmodus der halbautomatischen Steuerung: Genauso wie beim Betriebsmodus der automatischen Steuerung wird, wenn das Ausrücken und Schließen der Kupplung gesteuert wird, immer noch von der Antriebsvorrichtung 430 für das Ausrücken und Schließen der Kupplung eine Kraftquelle bereitgestellt. In diesem Betriebsmodus jedoch muss der Fahrer das Pedal 10 treten oder loslassen, um für den Start der Antriebsvorrichtung 430 ein Triggersignal bereitzustellen. Des Weiteren kann diese Aktion des Tretens oder Loslassens des Pedals 10 außerdem dafür verwendet werden, die Betriebsgewohnheiten des Fahrers für das Treten oder Loslassen des Pedals beim Steuern des Ausrückens und Schließens der Kupplung zu befriedigen.

Nachfolgend werden die drei Betriebsmodi der Kupplungsbetätigungsvorrichtung genau beschrieben:

### Betriebsmodus der Steuerung durch eine Person

Wie Fig. 5 zeigt, tritt die Kupplungsbetätigungsvorrichtung in den Betriebsmodus der Steuerung durch eine Person ein, wenn die Steuereinheit 441 einen Befehl der Steuerung durch eine Person empfängt. In diesem Betriebsmodus steuert die Steuereinheit 441 die Antriebsvorrichtung 430 zum Antreiben des ersten Kolbens 420, so dass dieser unbeweglich eine Position beibehält, die eine Verbindung der ersten Ölöffnung 414 und der zweiten Ölöffnung 415 veranlasst. In diesem Ausführungsbeispiel wird im Betriebsmodus der Steuerung durch eine Person der erste Dichtungsring 421 am ersten Kolben 420 an einer Position an der rechten Seite der ersten Ölöffnung 414 gehalten, um die Verbindung der ersten Ölöffnung 414 mit der zweiten Ölöffnung 415 zu realisieren.

In diesem Ausführungsbeispiel stellt die Position des ersten Kolbens 420 im Betriebsmodus der Steuerung durch eine Person die Anfangsposition des ersten Kolbens 420 in jedem Betriebsmodus der Kupplungsbetätigungsvorrichtung dar, und stellt die Position des ersten Dichtungsrings 421 im Betriebsmodus der Steuerung durch eine Person die Anfangsposition des ersten Dichtungsrings 421 in jedem Betriebsmodus der Kupplungsbetätigungsvorrichtung dar.

Der Vorgang des Steuerns des Ausrückens der Kupplung lautet folgendermaßen: Der Fahrer tritt das Pedal 10, das Hydrauliköl im Geberzylinder 20 fließt nacheinander durch das Hydraulikrohr 50, die erste Ölöffnung 414, die Hydraulikkammer 416, die zweite Ölöffnung 415 und das Hydraulikrohr 60 zum Arbeitszylinder 30, wodurch das Ausrücken der Kupplung realisiert wird.

Der Vorgang des Steuerns des Schließens der Kupplung verläuft folgendermaßen: Der Fahrer lässt das Pedal 10 los, das Hydrauliköl im Arbeitszylinder 30 fließt nacheinander durch das Hydraulikrohr 60, die zweite Ölöffnung 415, die Hydraulikkammer 416, die erste Ölöffnung 414 und das Hydraulikrohr 50 zum Geberzylinder 20, wodurch das Schließen der Kupplung realisiert wird.

Wenn gewählt wird, dass sich die Kupplungsbetätigungsvorrichtung im Betriebsmodus der Steuerung durch eine Person befindet, kann deshalb die Anforderung beim Fahren erfüllt werden, dass der Fahrer durch das Treten des Pedals das Ausrücken der Kupplung veranlasst und durch das Loslassen des Pedals das Schließen der Kupplung veranlasst.

### Betriebsmodus der automatischen Steuerung

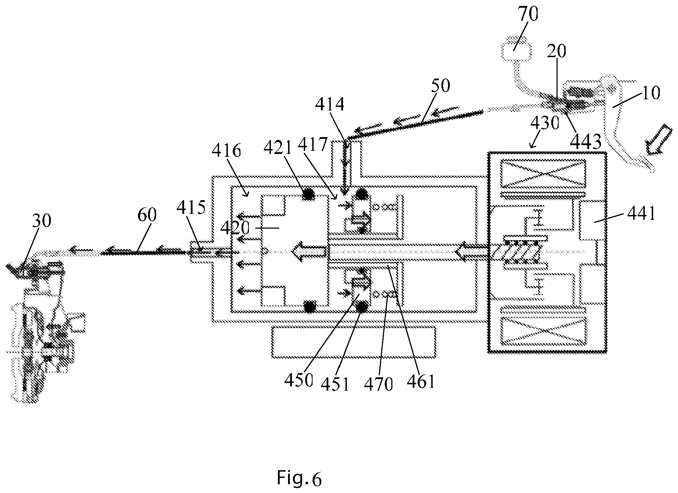

Wie Fig. 6 zeigt, tritt die Kupplungsbetätigungsvorrichtung in den Betriebsmodus der automatischen Steuerung ein, wenn die Steuereinheit 441 einen Befehl der automatischen Steuerung empfängt. Im Anfangsmoment des Empfangs des Befehls der automatischen Steuerung befindet sich, wie Fig. 5 zeigt, der erste Kolben 420 in der Anfangsposition und befindet sich der erste Dichtungsring 421 an der rechten Seite der ersten Ölöffnung 414.

Der Vorgang des Steuerns des Ausrückens der Kupplung verläuft folgendermaßen: Die Steuereinheit 441 steuert die Antriebsvorrichtung 430 zum automatischen Antrieb des ersten Kolbens 420 gemäß dem voreingestellten Programm, so dass dieser sich in Richtung einer allmählichen Annäherung hin zur zweiten Ölöffnung 415 von der Anfangsposition bis zur Endposition bewegt, was bewirkt, dass das Hydrauliköl in der Hydraulikkammer 416 nacheinander durch die zweite Ölöffnung 415 und das Hydraulikrohr 60 zum Arbeitszylinder 30 fließt, wodurch das Ausrücken der Kupplung realisiert wird.

Wie Fig. 5 und Fig. 6 zeigen, unterteilt sich der Vorgang des Bewegens des ersten Kolbens 420 von der Anfangsposition bis zur Endposition in zwei Phasen: erste Phase und zweite Phase. In der ersten Phase bewegt sich der erste Dichtungsring 421 am ersten Kolben 420 von der an der rechten Seite der ersten Ölöffnung 414 befindlichen Anfangsposition bis genau unterhalb der ersten Ölöffnung 414. In der zweiten Phase bewegt sich der zweite Dichtungsring 421 am ersten Kolben 420 von der Position genau unterhalb der ersten Ölöffnung 414 in Richtung einer allmählichen Annäherung hin zur zweiten Ölöffnung 415 bis zur Endposition, und in diesem Vorgang sind die erste Ölöffnung 414 und die zweite Ölöffnung 415 nicht verbunden.

In diesem Ausführungsbeispiel, wie Fig. 6 zeigt, kann realisiert werden, dass die erste Ölöffnung 414 und die zweite Ölöffnung 415 nicht verbunden sind, wenn der erste Dichtungsring 421 am ersten Kolben 420 sich an der linken Seite der ersten Ölöffnung 414 befindet. Mit anderen Worten, in diesem Ausführungsbeispiel befindet sich der erste Dichtungsring 421 an der linken Seite der ersten Ölöffnung 414, wenn sich der erste Kolben 420 in Endstellung befindet.

Wenn im Betriebsmodus der automatischen Steuerung das Ausrücken der Kupplung gesteuert wird, wird nach Möglichkeit der Abstand zwischen der Anfangsposition, in der sich der erste Dichtungsring 421 an der rechten Seite der ersten Ölöffnung 414 befindet, und der Position genau unterhalb der ersten Ölöffnung 414 verringert, um ein schnelles Ausrücken der Kupplung realisieren zu können.

Der Vorgang des Steuerns des Schließens der Kupplung verläuft folgendermaßen: Die Steuereinheit 441 steuert die Antriebsvorrichtung 430 zum automatischen Antrieb des ersten Kolbens 420 gemäß dem voreingestellten Programm, so dass dieser sich in Richtung eines allmählichen Entfernens weg von der zweiten Ölöffnung 415 von der Endposition bis zur Anfangsposition bewegt, was bewirkt, dass das Hydrauliköl im Arbeitszylinder 30 nacheinander durch das Hydraulikrohr 60 und die zweite Ölöffnung 415 zur Hydraulikkammer 416 fließt, wodurch das Schließen der Kupplung realisiert wird.

Die vorstehenden Ausführungen zeigen, dass im Vorgang des Ausrückens und Schließens der Kupplung im Betriebsmodus der automatischen Steuerung der erste Kolben 420 sich zumindest in der Position, die veranlasst, dass die erste Ölöffnung 414 und die zweite Ölöffnung 415 nicht verbunden sind, über eine Distanz bewegen muss, ehe ein Ausrücken und Schließen der Kupplung realisiert werden kann.

An der Steuereinheit 441 können Zeitintervalle für die Aktionen zum Ausrücken der Kupplung und Schließen der Kupplung eingestellt werden, und auf diese Weise wird realisiert, dass nach dem Ausrücken der Kupplung nach diesem Zeitintervall die Steuereinheit 441 automatisch die Antriebsvorrichtung 430 startet, um das Schließen der Kupplung zu realisieren.

Die vorstehenden Ausführungen zeigen, dass im Betriebsmodus der automatischen Steuerung die hydraulische Betätigungsvorrichtung unter Nutzung der Antriebsvorrichtung für das Ausrücken und Schließen der Kupplung eine Kraftquelle bereitstellt, um das automatische Ausrücken und Schließen der Kupplung zu realisieren, und dass es nicht erforderlich ist, dass der Fahrer das Pedal tritt oder loslässt, um das Ziel der Steuerung des Ausrückens und Schließens der Kupplung zu erreichen.

Die vorstehenden Ausführungen zeigen, dass das technische Konzept dieses Ausführungsbeispiels folgende Vorteile aufweist: Durch Zufügen einer automatischen hydraulischen Antriebseinrichtung in der Kupplungsbetätigungsvorrichtung wird bewirkt, dass der Fahrer sowohl den Modus der Steuerung durch eine Person als auch den automatischen Steuermodus für das Steuern des Ausrückens und Schließens der Kupplung wählen kann. Auf diese Weise kann der Fahrer, sobald die Antriebsvorrichtung defekt ist, dennoch den Modus der Steuerung durch eine Person wählen, um das Ausrücken und Schließen der Kupplung zu steuern. Außerdem kann der Fahrer auch den automatischen Steuermodus wählen, um das Ausrücken und Schließen der Kupplung zu steuern, damit die Arbeitsintensität des Fahrers verringert wird.

Jedoch kann in diesem Ausführungsbeispiel, um die Betriebsgewohnheiten des Fahrers für das Treten oder Loslassen des Pedals beim Ausrücken und Schließen der Kupplung zu befriedigen, der Fahrer auch das Pedal treten oder loslassen, wenn im Betriebsmodus der automatischen Steuerung das Ausrücken und Schließen der Kupplung gesteuert wird.

Wenn im Betriebsmodus der automatischen Steuerung das Ausrücken der Kupplung gesteuert wird und der Fahrer das Pedal 10 getreten hat, ist im Vorgang der zweiten Phase des Bewegens des ersten Kolbens 420 von der Anfangsposition bis zur Endposition die Hydraulickammer 417 mit der ersten Ölöffnung 414 verbunden, was bewirkt, dass das Hydrauliköl im Geberzylinder 20 nacheinander durch das Hydraulikrohr 50 und die erste Ölöffnung 414 zur Hydraulikkammer 417 fließt, und das zur Hydraulikkammer 417 fließende Hydrauliköl treibt den zweiten Kolben 450 zum Bewegen entlang der Stützsäule 461 in Richtung weg vom ersten Kolben 420 an, was den zweiten Kolben 450 veranlasst, in Richtung weg vom ersten Kolben 420 das elastische Teil 470 zusammenzudrücken, und im Weiteren das elastische Teil 470 veranlasst, eine allmählich größer werdende Druckverformung vorzunehmen.

Im Vorgang des Steuerns des Ausrückens der Kupplung im Betriebsmodus der automatischen Steuerung wird der Fahrer nicht das Gefühl haben, ins Leere zu treten, da beim Treten des Pedals 10 der Fuß des Fahrers eine vom elastischen Teil 470 ausgeübte und allmählich größer werdende Gegenkraft aufnimmt. Außerdem muss die vom Fahrer ausgeübte Pedalkraft nur die vom elastischen Teil 470 ausgeübte Gegenkraft überwinden. Auf diese Weise kann, wenn die vom elastischen Teil 470 ausgeübte Gegenkraft relativ klein eingestellt ist, die vom Fahrer auf das Pedal ausgeübte Kraft verringert werden, so dass die Bedienung durch den Fahrer komfortabler wird und die Arbeitsintensität des Fahrers verringert wird.

Im Vorgang des Steuerns des Schließens der Kupplung im Betriebsmodus der automatischen Steuerung treibt die Antriebsvorrichtung 430 den ersten Kolben 420 an, so dass dieser sich in Richtung eines allmählichen Entfernens weg von der zweiten Ölöffnung 415 von der Endposition bis zur Anfangsposition bewegt. In diesem Vorgang kann der Fahrer langsam das Pedal 10 loslassen, das elastische Teil 470 wird allmählich die Verformung wiederherstellen, und das Hydrauliköl in der Hydraulikkammer 416 fließt nacheinander durch die erste Ölöffnung 414, das Hydraulikrohr 50 und den Geberzylinder 20 zum Flüssigkeitsbehälter 70.

Die vorstehenden Analysen zeigen, dass im Betriebsmodus der automatischen Steuerung beim Steuern des Ausrückens und Schließens der Kupplung, selbst wenn der Fahrer das Pedal getreten oder losgelassen hat, die Wirkung der Aktion des Tretens oder Loslassens des Pedals jedoch nicht identisch mit der Wirkung im Betriebsmodus der Steuerung durch eine Person ist und lediglich dazu dient, die Betriebsgewohnheiten des Fahrers für das Treten oder Loslassen des Pedals beim Steuern des Ausrückens und Schließens der Kupplung zu befriedigen, ohne eine reale operative Bedeutung dafür zu haben, ob die Kupplung ausrücken und schließen kann. Es ist die Antriebsvorrichtung, die tatsächlich für das Ausrücken und Schließen der Kupplung eine Kraftquelle bereitstellt, was bewirkt, dass der Betriebsmodus der automatischen Steuerung folgende Vorteile aufweisen kann:
Wenn die Arbeitsintensität des Fahrers verringert wird, werden außerdem die Betriebsgewohnheiten des Fahrers für das Treten oder Loslassen des Pedals beim Steuern des Ausrückens und Schließens der Kupplung befriedigt. Außerdem wird bewirkt, dass der Betriebsmodus der automatischen Steuerung gegenüber dem Betriebsmodus der Steuerung durch eine Person folgende Vorteile aufweist: Die vom Fahrer auf das Pedal ausgeübte Kraft kann verringert werden, so dass die Bedienung durch den Fahrer komfortabler wird und die Arbeitsintensität des Fahrers verringert wird. Überdies wird sich sogar nach Verwendung der Kupplung über einen Zeitraum hinweg diese Pedalkraft nicht wegen des Verschleißes der Kupplungsscheibe erhöhen und wird nicht die Arbeitsintensität des Fahrers vergrößern.

### Betriebsmodus der halbautomatischen Steuerung

Wie Fig. 6 zeigt, tritt die Kupplungsbetätigungsvorrichtung in den Betriebsmodus der halbautomatischen Steuerung ein, wenn die Steuereinheit 441 einen Befehl der halbautomatischen Steuerung empfängt. Genauso wie beim Betriebsmodus der automatischen Steuerung befindet sich im Anfangsmoment des Empfangs des Befehls der halbautomatischen Steuerung, wie Fig. 5 zeigt, der erste Kolben 420 in der Anfangsposition, und befindet sich der erste Dichtungsring 421 am ersten Kolben 420 an der rechten Seite der ersten Ölöffnung 414.

Nachdem die Steuereinheit 441 den Befehl der halbautomatischen Steuerung empfangen hat, sendet, wenn der Fahrer das Pedal 10 tritt, der erste Sensor 443 einen Befehl an die Steuereinheit 441, dass das Pedal getreten wird, und die Steuereinheit 441 steuert die Antriebsvorrichtung 430 zum Antreiben des ersten Kolbens 420 gemäß dem empfangenen Befehl, dass das Pedal getreten wird, so dass dieser sich in einem Positionsbereich bewegt, der veranlasst, dass die erste Ölöffnung 414 und die zweite Ölöffnung 415 nicht verbunden sind, um das Ausrücken der Kupplung zu realisieren. Wenn sich der erste Kolben 420 in einem Positionsbereich bewegt, der veranlasst, dass die erste Ölöffnung 414 und die zweite Ölöffnung 415 nicht verbunden sind, ist die Hydraulikkammer 416 mit der ersten Ölöffnung 414 verbunden.

Nachdem die Steuereinheit 441 den Befehl der halbautomatischen Steuerung empfangen hat, sendet, wenn der Fahrer das Pedal 10 loslässt, der erste Sensor 443 einen Befehl an die Steuereinheit 441, dass das Pedal losgelassen wird, und die Steuereinheit 441 steuert die Antriebsvorrichtung 430 zum Antreiben des ersten Kolbens 420 gemäß dem empfangenen Befehl, dass das Pedal losgelassen wird, so dass dieser sich in einem Positionsbereich bewegt, der veranlasst, dass die erste Ölöffnung 414 und die zweite Ölöffnung 415 nicht verbunden sind, um das Schließen der Kupplung zu realisieren. Wenn sich der erste Kolben 420 in einem Positionsbereich bewegt, der veranlasst, dass die erste Ölöffnung 414 und die zweite Ölöffnung 415 nicht verbunden sind, ist die Hydraulikkammer 416 mit der ersten Ölöffnung 414 verbunden.

Zum Vorgang des Steuerns des Ausrückens der Kupplung im Betriebsmodus der halbautomatischen Steuerung kann auf den oben beschriebenen Vorgang des Steuerns des Ausrückens der Kupplung im Betriebsmodus der automatischen Steuerung verwiesen werden, worauf hier nicht näher eingegangen wird; zum Vorgang des Steuerns des Schließens der Kupplung im Betriebsmodus der halbautomatischen Steuerung kann auf den oben beschriebenen Vorgang des Steuerns des Schließens der Kupplung im Betriebsmodus der automatischen Steuerung verwiesen werden, worauf hier nicht näher eingegangen wird.

Die vorstehenden Ausführungen zeigen, dass beim Steuern des Ausrückens und Schließens der Kupplung im Betriebsmodus der halbautomatischen Steuerung und im Betriebsmodus der automatischen Steuerung stets von der Antriebsvorrichtung 430 für das Ausrücken und Schließen der Kupplung eine Kraftquelle bereitgestellt wird. Beide weisen jedoch folgende Unterschiede auf: Im Betriebsmodus der halbautomatischen Steuerung muss der Fahrer das Pedal 10 treten oder loslassen, um für den Start der Antriebsvorrichtung 430 ein Triggersignal bereitzustellen. Des Weiteren kann diese Aktion des Tretens oder Loslassens des Pedals 10 außerdem dafür verwendet werden, die Betriebsgewohnheiten des Fahrers für das Treten oder Loslassen des Pedals beim Steuern des Ausrückens und Schließens der Kupplung zu befriedigen. Im Betriebsmodus der automatischen Steuerung dagegen kann der Fahrer das Pedal 10 treten oder loslassen, und diese Aktion des Tretens oder Loslassens des Pedals 10 wird nur dazu verwendet, die Betriebsgewohnheiten des Fahrers für das Treten oder Loslassen des Pedals beim Steuern des Ausrückens und Schließens der Kupplung zu befriedigen.

In diesem Ausführungsbeispiel, wie Fig. 4 zeigt, umfasst die automatische hydraulische Antriebseinrichtung 440 außerdem: einen zweiten Sensor 444 für ein Überwachen der Position des ersten Kolbens 420 und die Kommunikation mit der Steuereinheit 441. In diesem Ausführungsbeispiel befindet sich der zweite Sensor 444 am Ölzylinder 410.

Im Betriebsmodus der automatischen Steuerung und im Betriebsmodus der halbautomatischen Steuerung kann die Steuereinheit 441 gemäß der vom zweiten Sensor 444 gewonnenen Verlagerungsinformationen des ersten Kolbens beurteilen, ob der erste Kolben 420 die voreingestellte Position erreicht hat, wenn sich der erste Kolben 420 von der Anfangsposition zur Endposition oder von der Endposition zur Anfangsposition bewegt: Falls der erste Kolben 420 die voreingestellte Position erreicht hat, gibt der zweite Sensor 444 an die Steuereinheit 441 einen Befehl aus, um das Antreiben der Antriebsvorrichtung 430 anzuhalten; andernfalls treibt die Steuereinheit 441 die Antriebsvorrichtung 430 weiterhin an.

Wenn außerdem im Betriebsmodus der Steuerung durch eine Person, im Betriebsmodus der automatischen Steuerung und im Betriebsmodus der halbautomatischen Steuerung gemäß dem zweiten Sensor 444 festgestellt wird, dass sich der erste Kolben 420 nicht in der Anfangsposition befindet, kann die Steuereinheit 441 die Antriebsvorrichtung 430 zum Antreiben des ersten Kolbens 420 steuern, so dass dieser die Anfangsposition erreicht.

Es muss erläutert werden, dass im Betriebsmodus der Steuerung durch eine Person, im Betriebsmodus der automatischen Steuerung und im Betriebsmodus der halbautomatischen Steuerung die Anfangsposition des ersten Kolbens 420 nicht nur auf dieses Ausführungsbeispiel beschränkt sein soll, sondern auch auf andere Positionen eingestellt werden kann.

Wenn die Anfangsposition des ersten Kolbens 420 bewirkt, dass in der Anfangszeit des Empfangs von Befehlen der Steuerung durch eine Person der erste Kolben 420 sich in einer Position befindet, die veranlasst, dass die erste Ölöffnung 414 und die zweite Ölöffnung 415 nicht verbunden sind, steuert die Steuereinheit 441 zuerst die Antriebsvorrichtung 430 zum Antreiben des ersten Kolbens 420, so dass er sich in eine feste Position bewegt, die veranlasst, dass die erste Ölöffnung 414 und die zweite Ölöffnung 415 verbunden sind.

Wenn die Anfangsposition des ersten Kolbens 420 bewirkt, dass in der Anfangszeit des Empfangs von Befehlen der automatischen Steuerung oder der halbautomatischen Steuerung der erste Kolben 420 sich in einer Position befindet, die veranlasst, dass die erste Ölöffnung 414 und die zweite Ölöffnung 415 verbunden sind, steuert die Steuereinheit 441 zuerst die Antriebsvorrichtung 430 zum Antreiben des ersten Kolbens 420, so dass er sich in eine Position bewegt, die veranlasst, dass die erste Ölöffnung 414 und die zweite Ölöffnung 415 nicht verbunden sind.

Genauer kann es sich in einem Änderungsbeispiel dieses Ausführungsbeispiels, wie Fig. 4 zeigt, auch bei der Position, in der sich der erste Kolben 420 befindet, wenn sich der Dichtungsring 421 am ersten Kolben 420 genau unterhalb der ersten Ölöffnung 414 befindet, um die Anfangsposition handeln.

In diesem Ausführungsbeispiel, wie Fig. 4 weiterhin zeigt, kann in der automatischen hydraulischen Antriebseinrichtung 40 ein mit der Steuereinheit 441 kommunizierender 3-Wege-Schalter 442 angeordnet sein, um an die Steuereinheit 441 Befehle der Steuerung durch eine Person, Befehle der automatischen Steuerung sowie Befehle der halbautomatischen Steuerung zu senden und im Weiteren das Steuern und Umschalten der drei Betriebsmodi vorzunehmen. Ein 3-Wege-Schalter 442 kann am Armaturenbrett eines Fahrzeugs angeordnet sein.

In einem Änderungsbeispiel dieses Ausführungsbeispiels kann es auch so sein, dass die erste Ölöffnung und die zweite Ölöffnung an der Zylinderwand angeordnet sind und die erste und die zweite Ölöffnung in Bewegungsrichtung des ersten Kolbens einen Abstand aufweisen. In diesem Fall, wenn der erste Kolben unbeweglich in einer Position bleibt, die eine Verbindung der ersten Ölöffnung und der zweiten Ölöffnung veranlasst, dient der erste Kolben dazu, die axiale Endfläche der Stützsäule rückseitig zur ersten Ölöffnung und zur zweiten Ölöffnung gerichtet fest anzuordnen. Auf diese Weise kann weiterhin folgende Aufgabe realisiert werden: Im Betriebsmodus der Steuerung durch eine Person befindet sich der erste Kolben unbeweglich in einem Positionsbereich, der eine Verbindung der ersten und zweiten Ölöffnung veranlasst; im halbautomatischen Betriebsmodus bewegt sich der erste Kolben in einem Positionsbereich, der veranlasst, dass die Hydraulikkammer, die vom ersten Kolben, zweiten Kolben sowie der Zylinderwand durch Umschließen gebildet wird, mit der ersten Ölöffnung verbunden ist und gleichzeitig die erste Ölöffnung und die zweite Ölöffnung nicht verbunden sind.

In diesem Ausführungsbeispiel wird, wie Fig. 4 zeigt, die Steuereinheit 441 außerdem dafür verwendet, dass: beim Empfang von Befehlen für das Kompensieren von Hydrauliköl die Antriebsvorrichtung 430 zum Antreiben des ersten Kolbens 420 gesteuert wird, so dass dieser unbeweglich eine Position beibehält, die eine Verbindung der zweiten Ölöffnung 415 und der Hydraulikkammer 417 mit der ersten Ölöffnung 414 veranlasst.

In diesem Ausführungsbeispiel sind die Hydraulikkammer 416 und die Hydraulikkammer 417 mit der ersten Ölöffnung 414 verbunden, wenn sich der erste Dichtungsring 421 am ersten Kolben 420 an einer Position direkt unterhalb der ersten Ölöffnung 414 befindet. Wenn sich der erste Dichtungsring 421 direkt unterhalb der ersten Ölöffnung 414 befindet, muss gewährleistet sein, dass der erste Dichtungsring 421 den Ausgang der ersten Ölöffnung 414 nicht vollständig verschließen kann, und es muss sowohl sichergestellt sein, dass die erste Ölöffnung 414 mit der Hydraulikkammer 416 verbunden ist, als auch gewährleistet sein, dass die erste Ölöffnung 414 mit der Hydraulikkammer 417 verbunden ist. In dieser Position, wie Fig. 3 zeigt, kann durch den Flüssigkeitsbehälter 70 gleichzeitig für die Hydraulikkammer 416 und die Hydraulikkammer 417 Hydrauliköl aufgefüllt werden.

In einem Änderungsbeispiel dieses Ausführungsbeispiels können in der automatischen hydraulischen Antriebseinrichtung auch ein zweiter Kolben, eine Stützsäule, ein Sockel sowie ein elastisches Teil fehlen, so dass die Kupplungsbetätigungsvorrichtung nur den Betriebsmodus der Steuerung durch eine Person und den Betriebsmodus der automatischen Steuerung, wie oben beschrieben, aufweist. In diesem Fall kann es so sein, dass sich die erste Ölöffnung am Zylinderdeckel des Ölzylinders befindet und sich die zweite Ölöffnung an der Zylinderwand des Ölzylinders befindet oder dass sich die erste und die zweite Ölöffnung an der Zylinderwand des Ölzylinders befinden und die erste und die zweite Ölöffnung in Bewegungsrichtung des ersten Kolbens einen Abstand aufweisen.

Wie Fig. 4 weiterhin zeigt, umfasst in diesem Ausführungsbeispiel die Antriebsvorrichtung 430 einen Elektromotor 431, ein Untersetzungsgetriebe 432, das mit der Ausgangswelle des Elektromotors 431 gekoppelt ist, sowie eine Gewindespindelvorrichtung 433, umfasst die Gewindespindelvorrichtung 433 eine Gewindespindel 433a und einen auf die Gewindespindel 433a aufgesetzten Außenring 433b, treibt der Elektromotor 431 durch das Untersetzungsgetriebe 432 den Außenring 433b zur Drehung an, ist die Gewindespindel 433a mit dem ersten Kolben 420 fest verbunden. Die Wirkung des Untersetzungsgetriebes 432 besteht darin, das vom Elektromotor 431 ausgegebene Drehmoment zu vergrößern, und die Wirkung der Gewindespindelvorrichtung 433 besteht darin, die vom Elektromotor 431 ausgegebene Drehbewegung in eine Linearbewegung umzuwandeln und im Weiteren den ersten Kolben 420 zu einer Linearbewegung anzutreiben.

Wenn in diesem Ausführungsbeispiel die Antriebsvorrichtung 430 einen Elektromotor 431 und eine Gewindespindelvorrichtung 433 umfasst und wenn sich im Betriebsmodus der automatischen Steuerung und im Betriebsmodus der halbautomatischen Steuerung der erste Kolben 420 von der Anfangsposition zur Endposition bewegt, um das Ausrücken der Kupplung zu realisieren, oder von der Endposition zur Anfangsposition bewegt, um das Schließen der Kupplung zu realisieren, kann die Steuereinheit 441 auch gemäß der Drehzahl des Elektromotors 431 eine Umrechnung vornehmen und eine Vortriebsdistanz der Gewindespindel 433a ermitteln und im Weiteren die Bewegungsdistanz des ersten Kolbens 420 steuern, was bewirkt, dass der erste Kolben 420 die voreingestellte Position erreichen kann. Sobald die Drehzahl des Elektromotors 431 den Sollwert erreicht hat, hält die Steuereinheit 441 das Antreiben des Elektromotors 431 zur Drehung an.

Falls in anderen Ausführungsbeispielen der Elektromotor 431 ein ausreichend großes Drehmoment ausgeben kann, kann in der Antriebsvorrichtung 430 das Untersetzungsgetriebe 432 auch fehlen. In diesem Fall treibt der Elektromotor 431 den Außenring 433b direkt zur Drehung an.

In diesem Ausführungsbeispiel handelt es sich bei dem Untersetzungsgetriebe 432 um ein Planeten-Untersetzungsgetriebe und bei der Gewindespindelvorrichtung 433 um eine Kugelgewindespindel.

In anderen Ausführungsbeispielen kann auch eine andere Antriebsvorrichtung 430 verwendet werden, die den ersten Kolben 420 zur Bewegung antreiben kann, und es soll keine Beschränkung nur auf dieses Ausführungsbeispiel erfolgen.

In diesem Ausführungsbeispiel, wie Fig. 3 zeigt, handelt es sich bei dem Arbeitszylinder 30 um einen extern angeordneten Nehmerzylinder (Semi-Slave-Cylinder, kurz SSC). In anderen Ausführungsbeispielen kann es sich bei dem Arbeitszylinder 30 auch um einen Zentraleinrücker (Concentric Slave Cylinder, kurz CSC) handeln.

Die hydraulische Betätigungsvorrichtung im vorstehend beschriebenen Kupplungssystem kann auch als Fahrzeugbremsbetätigungsvorrichtung verwendet werden. In diesem Fall handelt es sich bei dem vorstehenden Vorgang des Steuerns des Ausrückens der Kupplung durch die Kupplungsbetätigungsvorrichtung um den Vorgang des Steuern des Bremsens des Fahrzeugs durch die Fahrzeugbremsbetätigungsvorrichtung; und handelt es sich bei dem vorstehenden Vorgang des Steuerns des Schließens der Kupplung durch die Kupplungsbetätigungsvorrichtung um den Vorgang des Anhaltens des Steuerns des Bremsens des Fahrzeugs durch die Fahrzeugbremsbetätigungsvorrichtung.

Im Vergleich mit derzeitigen durch eine Person gesteuerten Fahrzeugbremsbetätigungsvorrichtungen weist die Fahrzeugbremsbetätigungsvorrichtung dieses Ausführungsbeispiels folgende Vorteile auf: Durch Zufügen einer automatischen hydraulischen Antriebseinrichtung in der Fahrzeugbremsbetätigungsvorrichtung wird bewirkt, dass der Fahrer sowohl den Modus der Steuerung durch eine Person als auch den automatischen Steuermodus für ein Steuern des Bremsens des Fahrzeugs wählen kann. Auf diese Weise kann der Fahrer, sobald die Antriebsvorrichtung defekt ist, dennoch den Modus der Steuerung durch eine Person wählen, um das Bremsen des Fahrzeugs zu steuern. Außerdem kann der Fahrer auch den automatischen Steuermodus wählen, um das Bremsen des Fahrzeugs zu steuern, damit die Arbeitsintensität des Fahrers verringert wird.

Des Weiteren kann, da im Betriebsmodus der halbautomatischen Steuerung beim Bremsen des Fahrzeugs die Antriebsvorrichtung für das Bereitstellen einer Kraftquelle verwendet wird, der Betriebsmodus der halbautomatischen Steuerung gleichzeitig die Vorteile der Betriebsmodi der Steuerung durch eine Person und der automatischen Steuerung aufweisen: Gleichzeitig mit der Verringerung der Arbeitsintensität des Fahrers werden außerdem die Betriebsgewohnheiten des Fahrers für das Treten des Pedals beim Bremsen des Fahrzeugs befriedigt.

## Patentansprüche

1. Hydraulische Betätigungsvorrichtung, die einen Geberzylinder (2, 20), einen mit dem Geberzylinder (2, 20) verbundenen Flüssigkeitsbehälter (70), einen Arbeitszylinder (3, 30) sowie ein mit der Schubstange des Geberzylinders (2, 20) verbundenes Pedal (1, 10) umfasst;
wobei sie außerdem eine automatische hydraulische Antriebseinrichtung (5, 40, 430) umfasst und die automatische hydraulische Antriebseinrichtung (5, 40) umfasst:
einen Ölzylinder (410), wobei am Ölzylinder (410) mit dem Innenhohlraum (411) des Ölzylinders (410) verbunden eine erste und eine zweite Ölöffnung (414, 415) vorgesehen sind, die erste Ölöffnung (414) durch ein Hydraulikrohr (50) mit dem Geberzylinder (2, 20) verbunden ist, die zweite Ölöffnung (415) durch ein Hydraulikrohr (60) mit dem Arbeitszylinder (3, 30) verbunden ist, von der ersten und der zweiten Ölöffnung (414, 415) zumindest eine Ölöffnung sich an der Zylinderwand (412) des Ölzylinders (410) befindet;
einen beweglich im Innenhohlraum (411) befindlichen ersten Kolben (420), wobei der erste Kolben (420) mit der Zylinderwand (412) einen dichten Kontakt hat und die erste und die zweite Ölöffnung (414, 415) in Bewegungsrichtung des ersten Kolbens (420) einen Abstand aufweisen;
eine Antriebsvorrichtung (430) für das Antreiben des ersten Kolbens (420) zum Bewegen im Innenhohlraum (411);
eine Steuereinheit (5b, 441), die dafür verwendet wird, dass:
beim Empfang von Befehlen der automatischen Steuerung die Antriebsvorrichtung (5, 40) zum automatischen Antreiben des ersten Kolbens (420) gemäß dem voreingestellten Programm gesteuert wird, so dass dieser sich in einem Positionsbereich bewegt, der veranlasst, dass die erste und die zweite Ölöffnung (414, 415) nicht verbunden sind,
**gekennzeichnet dadurch, dass** die Steuereinheit (5b, 441) beim Empfang von Befehlen der Steuerung durch eine Person die Antriebsvorrichtung (430) zum Antreiben des ersten Kolbens (420) so steuert, dass dieser unbeweglich eine Position beibehält, die eine Verbindung der ersten und der zweiten Ölöffnung (414, 415) veranlasst.

2. Hydraulische Betätigungsvorrichtung nach Anspruch 1, **dadurch gekennzeichnet, dass** sich die erste Ölöffnung (414) an der Zylinderwand (412) befindet und die automatische hydraulische Antriebseinrichtung (5, 40) außerdem umfasst:
eine Stützsäule (461), deren einesEnde mit der axialen Endfläche des ersten Kolbens (420) fest verbunden ist, wobei der erste Kolben (420) dazu dient, die axiale Endfläche der Stützsäule (461) rückseitig zur ersten und zur zweiten Ölöffnung (414, 415) gerichtet fest anzuordnen, wenn der erste Kolben (420) unbeweglich eine Position beibehält, die eine Verbindung der ersten und zweiten Ölöffnung (414, 415) veranlasst;
einen Sockel (462), der am anderen Ende der Stützsäule (461) fest angeordnet ist und sich in radialer Richtung der Stützsäule (461) nach außen erstreckt;
einen beweglich auf die Stützsäule (461) aufgesetzten zweiten Kolben (450), wobei der zweite Kolben (450) mit der Zylinderwand (412) und der Stützsäule (461) einen dichten Kontakt hat und der zweite Kolben (450), der erste Kolben (420) und die Zylinderwand (412) durch Umschließen eine Hydraulikkammer (416, 417) bilden;
ein zwischen dem zweiten Kolben (450) und dem Sockel (462) befindliches elastisches Teil (470), wobei das elastische Teil (470) in Bewegungsrichtung des ersten Kolbens (420) einen komprimierten Zustand aufweist;
wenn die Antriebsvorrichtung (430) den ersten Kolben (420) antreibt, so dass dieser sich in einem Positionsbereich bewegt, der veranlasst, dass die erste und die zweite Ölöffnung (414, 415) nicht verbunden sind, die Hydraulikkammer (416) und die erste Ölöffnung (414) miteinander verbunden sind.

3. Hydraulische Betätigungsvorrichtung nach Anspruch 2, **dadurch gekennzeichnet, dass** sie außerdem umfasst: einen ersten Sensor (443) für ein Überwachen, ob das Pedal (1, 10) getreten oder losgelassen wird.
die Steuereinheit (5b, 441) dafür verwendet wird, dass: beim Empfang von Befehlen der halbautomatischen Steuerung sowie von Befehlen, die vom ersten Sensor (443) darüber ausgegeben werden, ob das Pedal (1, 10) getreten oder losgelassen wird, die Antriebsvorrichtung (430) zum Antreiben des ersten Kolbens (420) gemäß dem Befehl zum Treten oder Loslassen gesteuert wird, so dass dieser sich in einem Positionsbereich bewegt, der veranlasst, dass die erste Ölöffnung (414) und die zweite Ölöffnung (415) nicht verbunden sind.

4. Hydraulische Betätigungsvorrichtung nach Anspruch 2, **dadurch gekennzeichnet, dass** es sich bei dem elastischen Teil (470) um eine Schraubenfeder handelt.

5. Hydraulische Betätigungsvorrichtung nach Anspruch 2, **dadurch gekennzeichnet, dass** zwischen der äußeren Umfangsfläche des zweiten Kolbens (450) und der Kolbenwand ein radialer Zwischenraum besteht, die äußere Umfangsfläche des zweiten Kolbens (450) eine zweite ringförmige Dichtungsnut aufweist, welche die Achse des zweiten Kolbens (450) umläuft, und die zweite ringförmige Dichtungsnut einen zweiten Dichtungsring (451) aufnimmt, der mit der Zylinderwand (412) dichten Kontakt hat.

6. Hydraulische Betätigungsvorrichtung nach Anspruch 2, **dadurch gekennzeichnet, dass** die Steuereinheit (5b, 441) außerdem dafür verwendet wird, dass: beim Empfang von Befehlen für ein Kompensieren von Hydrauliköl die Antriebsvorrichtung (430) zum Antreiben des ersten Kolbens (420) gesteuert wird, so dass dieser unbeweglich eine Position beibehält, die eine Verbindung der zweiten Ölöffnung (415) und der Hydraulikkammer (416) mit der ersten Ölöffnung (414) veranlasst.

7. Hydraulische Betätigungsvorrichtung nach Anspruch 1, **dadurch gekennzeichnet, dass** zwischen der Umfangsfläche des ersten Kolbens (420) und der Kolbenwand ein radialer Zwischenraum besteht, die Umfangsfläche des ersten Kolbens (420) eine erste ringförmige Dichtungsnut aufweist, welche die Achse des ersten Kolbens (420) umläuft, und die erste ringförmige Dichtungsnut einen ersten Dichtungsring (421) aufnimmt, der mit der Zylinderwand (412) dichten Kontakt hat.

8. Hydraulische Betätigungsvorrichtung nach Anspruch 1, **dadurch gekennzeichnet, dass** sie außerdem umfasst: einen zweiten Sensor (444) für ein Überwachen der Position des ersten Kolbens (420) und die Kommunikation mit der Steuereinheit (5b, 441).

9. Hydraulische Betätigungsvorrichtung nach Anspruch 1, **dadurch gekennzeichnet, dass** von der ersten und der zweiten Ölöffnung (414, 415) sich die eine an der Zylinderwand (412) befindet und sich die andere am Zylinderdeckel (413) des Ölzylinders (410) befindet; oder sich die erste und die zweite Ölöffnung (414, 415) sich an der Zylinderwand (412) befinden.

10. Hydraulische Betätigungsvorrichtung nach Anspruch 1, **dadurch gekennzeichnet, dass** die Antriebsvorrichtung (5, 40, 430) außerdem umfasst: einen Elektromotor (5a, 431) sowie eine Gewindespindelvorrichtung (5c, 433), die dafür verwendet wird, die vom Elektromotor (5a, 431) ausgegebene Drehbewegung in eine Linearbewegung umzuwandeln, wobei die Gewindespindelvorrichtung (5c, 433) eine Gewindespindel (433a) und einen auf die Gewindespindel (433a) aufgesetzten Außenring (433b) umfasst, der Elektromotor (5a, 431) den Außenring (433b) zur Drehung antreibt und die Gewindespindel (433a) mit dem ersten Kolben (420) fest verbunden ist.

11. Hydraulische Betätigungsvorrichtung nach Anspruch 10, **dadurch gekennzeichnet, dass** die Antriebsvorrichtung (5, 40, 430) außerdem ein Untersetzungsgetriebe (432) umfasst, das mit der Ausgangswelle des Elektromotors (5a, 431) gekoppelt ist, und der Elektromotor (5a, 431) durch das Untersetzungsgetriebe (432) den Außenring (433b) zur Drehung antreibt.

12. Hydraulische Betätigungsvorrichtung nach Anspruch 10, **dadurch gekennzeichnet, dass** die Steuereinheit (5b, 441) gemäß der Drehzahl des Elektromotors (5a, 431) die Bewegungsdistanz des ersten Kolbens (420) steuert.

13. Hydraulische Betätigungsvorrichtung nach einem der Ansprüche 1 bis 12, **dadurch gekennzeichnet, dass** es sich bei der hydraulischen Betätigungsvorrichtung um eine Kupplungsbetätigungsvorrichtung handelt.

14. Hydraulische Betätigungsvorrichtung nach einem der Ansprüche 1 bis 12, **dadurch gekennzeichnet, dass** es sich bei der hydraulischen Betätigungsvorrichtung um eine Fahrzeugbremsbetätigungsvorrichtung handelt.

15. Kupplungssystem, **dadurch gekennzeichnet, dass** es umfasst:
eine Kupplung (C);
eine hydraulische Betätigungsvorrichtung nach Anspruch 13, die einem Steuern des Ausrückens oder Schließens der Kupplung (C)dient.

16. Fahrzeugbremssystem, **dadurch gekennzeichnet, dass** es umfasst: eine hydraulische Betätigungsvorrichtung nach Anspruch 14.

## Claims

1. Hydraulic actuating apparatus, which comprises a master cylinder (2, 20), a liquid vessel (70) connected to the master cylinder (2, 20), a working cylinder (3, 30), and a pedal (1, 10) connected to the thrust rod of the master cylinder (2, 20);
wherein said hydraulic actuating apparatus furthermore comprises an automatic hydraulic drive device (5, 40, 430), and the automatic hydraulic drive device (5, 40) comprises:
an oil cylinder (410), wherein, on the oil cylinder (410), a first and a second oil opening (414, 415) are provided so as to be connected to the internal cavity (411) of the oil cylinder (410), the first oil opening (414) is connected by a hydraulic pipe (50) to the master cylinder (2, 20), the second oil opening (415) is connected by a hydraulic pipe (60) to the working cylinder (3, 30), and, of the first and the second oil opening (414, 415), at least one oil opening is situated on the cylinder wall (412) of the oil cylinder (410);
a first piston (420) which is situated movably in the internal cavity (411), wherein the first piston (420) is in sealing contact with the cylinder wall (412), and the first and the second oil openings (414, 415) have a spacing in a movement direction of the first piston (420) ;
a drive apparatus (430) for driving the first piston (420) for movement in the internal cavity (411);
a control unit (5b, 441) which is used to the effect that:
upon receipt of commands from the automatic controller, the drive apparatus (5, 40) is controlled so as to automatically drive the first piston (420) in accordance with the preset program, such that said first piston moves in a position range which has the effect that the first and the second oil opening (414, 415) are not connected,
**characterized in that**, upon receipt of commands from the controller by a person, the control unit (5b, 441) controls the drive device (430) so as to drive the first piston (420) in such a way that the latter immovably maintains a position which generates a connection of the first and of the second oil opening (414, 415).

2. Hydraulic actuating apparatus according to Claim 1, **characterized in that** the first oil opening (414) is situated on the cylinder wall (412) and the automatic hydraulic drive device (5, 40) furthermore comprises:
a support column (461), one end of which is fixedly connected to the axial end surface of the first piston (420), wherein the first piston (420) serves for fixedly arranging the axial end surface of the support column (461) as to be directed at the rear side towards the first and towards the second oil opening (414, 415) when the first piston (420) immovably maintains a position which generates a connection of the first and the second oil opening (414, 415);
a base (462) which is fixedly arranged on the other end of the support column (461) and which extends outwards in a radial direction of the support column (461);
a second piston (450) which is mounted movably on the support column (461), wherein the second piston (450) is in sealing contact with the cylinder wall (412) and with the support column (461), and the second piston (450), the first piston (420) and the cylinder wall (412) form a hydraulic chamber (416, 417) by enclosing it;
an elastic part (470) which is situated between the second piston (450) and the base (462), wherein the elastic part (470) has a compressed state in the direction of movement of the first piston (420);
when the drive apparatus (430) drives the first piston (420) such that the latter moves in a position range which has the effect that the first and the second oil opening (414, 415) are not connected, the hydraulic chamber (416) and the first oil opening (414) are connected to one another.

3. Hydraulic actuating apparatus according to Claim 2, **characterized in that** it furthermore comprises: a first sensor (443) for monitoring whether the pedal (1, 10) is depressed or released.
the control unit (5b, 441) is used to the effect that: upon receipt of commands from the semiautomatic controller and of commands output by the first sensor (443) with regard to whether the pedal (1, 10) is depressed or released, the drive apparatus (430) is controlled so as to drive the first piston (420) in accordance with the command for depression or release such that said first piston moves in a position range which has the effect that the first oil opening (414) and the second oil opening (415) are not connected.

4. Hydraulic actuating apparatus according to Claim 2, **characterized in that** the elastic part (470) is a helical spring.

5. Hydraulic actuating apparatus according to Claim 2, **characterized in that** a radial intermediate space exists between the outer circumferential surface of the second piston (450) and the piston wall, the outer circumferential surface of the second piston (450) has a second ring-shaped seal groove which encircles the axis of the second piston (450), and the second ring-shaped seal groove receives a second seal ring (451), which is in sealing contact with the cylinder wall (412).

6. Hydraulic actuating apparatus according to Claim 2, **characterized in that** the control unit (5b, 441) is furthermore used to the effect that: upon receipt of commands for a compensation of hydraulic oil, the drive apparatus (430) is controlled so as to drive the first piston (420) such that the latter immovably maintains a position which causes a connection of the second oil opening (415) and of the hydraulic chamber (416) to the first oil opening (414).

7. Hydraulic actuating apparatus according to Claim 1, **characterized in that** a radial intermediate space exists between the circumferential surface of the first piston (420) and the piston wall, the circumferential surface of the first piston (420) has a first ring-shaped seal groove which encircles the axis of the first piston (420), and the first ring-shaped seal groove receives a first seal ring (421), which is in sealing contact with the cylinder wall (412).

8. Hydraulic actuating apparatus according to Claim 1, **characterized in that** it furthermore comprises: a second sensor (444) for monitoring the position of the first piston (420) and communicating with the control unit (5b, 441) .

9. Hydraulic actuating apparatus according to Claim 1, **characterized in that**, of the first and the second oil opening (414, 415), one is situated on the cylinder wall (412) and the other is situated on the cylinder cover (413) of the oil cylinder (410); or the first and the second oil opening (414, 415) are situated on the cylinder wall (412).

10. Hydraulic actuating apparatus according to Claim 1, **characterized in that** the drive apparatus (5, 40, 430) furthermore comprises: an electric motor (5a, 431) and a threaded spindle apparatus (5c, 433), which is used for converting the rotational movement output by the electric motor (5a, 431) into a linear movement, wherein the threaded spindle apparatus (5c, 433) comprises a threaded spindle (433a) and an outer ring (433b) mounted onto the threaded spindle (433a), the electric motor (5a, 431) drives the outer ring (433b) in rotation, and the threaded spindle (433a) is fixedly connected to the first piston (420).

11. Hydraulic actuating apparatus according to Claim 10, **characterized in that** the drive apparatus (5, 40, 430) furthermore comprises a speed reduction gearing (432) which is coupled to the output shaft of the electric motor (5a, 431), and the electric motor (5a, 431) drives the outer ring (433b) in rotation by means of the speed reduction gearing (432).

12. Hydraulic actuating apparatus according to Claim 10, **characterized in that** the control unit (5b, 441) controls the movement distance of the first piston (420) in accordance with the rotational speed of the electric motor (5a, 431).

13. Hydraulic actuating apparatus according to any of Claims 1 to 12, **characterized in that** the hydraulic actuating apparatus is a clutch actuating apparatus.

14. Hydraulic actuating apparatus according to any of Claims 1 to 12, **characterized in that** the hydraulic actuating apparatus is a vehicle brake actuating apparatus.

15. Clutch system, **characterized in that** it comprises:
a clutch (C);
a hydraulic actuating apparatus according to Claim 13, which serves for controlling the disengagement or closure of the clutch (C).

16. Vehicle brake system, **characterized in that** it comprises: a hydraulic actuating apparatus according to Claim 14.

## Revendications

1. Dispositif de commande hydraulique, qui comprend un maître-cylindre (2, 20), un récipient de liquide (70) connecté au maître-cylindre (2, 20), un cylindre de travail (3, 30) ainsi qu'une pédale (1, 10) connectée à la tige poussoir du maître-cylindre (2, 20) ;
le dispositif de commande hydraulique comprenant en outre un dispositif d'entraînement hydraulique automatique (5, 40, 430) et le dispositif d'entraînement hydraulique automatique (5, 40) comprenant :
un cylindre d'huile (410), une première et une deuxième ouverture d'huile (414, 415) étant connectées au niveau du cylindre d'huile (410) à la cavité interne (411) du cylindre d'huile (410), la première ouverture d'huile (414) étant connectée par un tuyau hydraulique (50) au maître-cylindre (2, 20), la deuxième ouverture d'huile (415) étant connectée par un tuyau hydraulique (60) au cylindre de travail (3, 30), au moins une ouverture d'huile de la première et de la deuxième ouverture d'huile (414, 415) se trouvant au niveau de la paroi de cylindre (412) du cylindre d'huile (410) ;
un premier piston (420) se trouvant de manière déplaçable dans la cavité interne (411), le premier piston (420) étant en contact hermétique avec la paroi de cylindre (412) et la première et la deuxième ouverture d'huile (414, 415) étant espacées l'une de l'autre dans la direction de déplacement du premier piston (420) ;
un dispositif d'entraînement (430) pour entraîner le premier piston (420) de manière à ce qu'il se déplace dans la cavité interne (411) ;
une unité de commande (5b, 441), qui est utilisée de telle sorte que :
à la réception d'ordres de commande automatique, le dispositif d'entraînement (5, 40) pour l'entraînement automatique du premier piston (420) soit commandé en fonction du programme préétabli de telle sorte que le piston se déplace dans une plage de positions qui fait en sorte que la première et la deuxième ouverture d'huile (414 415) ne soient pas connectées,
**caractérisé en ce que** l'unité de commande (5b, 441), à la réception d'ordres de commande par une personne, commande le dispositif d'entraînement (430) pour entraîner le premier piston (420) de telle sorte que celui-ci conserve une position immobile qui permet une connexion entre la première et la deuxième ouverture d'huile (414, 415).

2. Dispositif de commande hydraulique selon la revendication 1, **caractérisé en ce que** la première ouverture d'huile (414) est située au niveau de la paroi de cylindre (412) et le dispositif d'entraînement hydraulique automatique (5, 40) comprend en outre :
une colonne de support (461) dont une extrémité est connectée fixement à la surface d'extrémité axiale du premier piston (420), le premier piston (420) servant à disposer fixement la surface d'extrémité axiale de la colonne de support (461) de manière orientée vers l'arrière par rapport à la première et à la deuxième ouverture d'huile (414, 415) si le premier piston (420) conserve une position immobile qui permet une connexion entre la première et la deuxième ouverture d'huile (414, 415) ;
un socle (462) qui est disposé fixement à l'autre extrémité de la colonne de support (461) et qui s'étend vers l'extérieur dans la direction radiale de la colonne de support (461) ;
un deuxième piston (450) placé de manière mobile sur la colonne de support (461), le deuxième piston (450) étant en contact hermétique avec la paroi de cylindre (412) et avec la colonne de support (461) et le deuxième piston (450), le premier piston (420) et la paroi de cylindre (412) formant, en l'entourant, une chambre hydraulique (416, 417) ;
une partie élastique (470) située entre le deuxième piston (450) et le socle (462), la partie élastique (470) présentant un état comprimé dans la direction de déplacement du premier piston (420) ;
lorsque le dispositif d'entraînement (430) entraîne le premier piston (420) de telle sorte que celui-ci se déplace dans une plage de positions qui fait en sorte que la première et la deuxième ouverture d'huile (414, 415) ne soient pas connectées, la chambre hydraulique (416) et la première ouverture d'huile (414) sont connectées l'une à l'autre.

3. Dispositif de commande hydraulique selon la revendication 2, **caractérisé en ce qu'**il comprend en outre : un premier capteur (443) pour surveiller si la pédale (1, 10) est enfoncée ou relâchée.
l'unité de commande (5b, 441) est utilisée de telle sorte qu'à la réception d'ordres de commande semi-automatique ainsi que d'ordres émis par le premier capteur (443) pour enfoncer ou relâcher la pédale (1, 10), le dispositif d'entraînement (430) pour l'entraînement du premier piston (420) soit commandé, en fonction de l'ordre d'enfoncer ou de relâcher, de telle sorte que celui-ci se déplace dans une plage de positions qui fait en sorte que la première ouverture d'huile (414) et la deuxième ouverture d'huile (415) ne soient pas connectées.

4. Dispositif de commande hydraulique selon la revendication 2, **caractérisé en ce que** la partie élastique (470) est un ressort hélicoïdal.

5. Dispositif de commande hydraulique selon la revendication 2, **caractérisé en ce qu'**entre la surface périphérique extérieure du deuxième piston (450) et la paroi du piston existe un espace intermédiaire radial, la surface périphérique extérieure du deuxième piston (450) présente une deuxième rainure d'étanchéité annulaire qui s'étend autour de l'axe du deuxième piston (450), et la deuxième rainure d'étanchéité annulaire reçoit une deuxième bague d'étanchéité (451) qui est en contact hermétique avec la paroi de cylindre (412).

6. Dispositif de commande hydraulique selon la revendication 2, **caractérisé en ce que** l'unité de commande (5b, 441) est en outre utilisée de telle sorte qu'à la réception d'ordres de compensation d'huile hydraulique, le dispositif d'entraînement (430) pour entraîner le premier piston (420) soit commandé de telle sorte que ce dernier conserve une position immobile qui autorise une connexion de la deuxième ouverture d'huile (415) et de la chambre hydraulique (416) avec la première ouverture d'huile (414).

7. Dispositif de commande hydraulique selon la revendication 1, **caractérisé en ce qu'**entre la surface périphérique du premier piston (420) et la paroi de piston existe un espace intermédiaire radial, la surface périphérique du premier piston (420) présente une première rainure d'étanchéité annulaire qui s'étend autour de l'axe du premier piston (420) et la première rainure d'étanchéité annulaire reçoit une première bague d'étanchéité (421) qui est en contact hermétique avec la paroi de cylindre (412).

8. Dispositif de commande hydraulique selon la revendication 1, **caractérisé en ce qu'**il comprend en outre : un deuxième capteur (444) pour surveiller la position du premier piston (420) et la communication avec l'unité de commande (5b, 441) .

9. Dispositif de commande hydraulique selon la revendication 1, **caractérisé en ce que** parmi la première et la deuxième ouverture d'huile (414, 415), l'une est située au niveau de la paroi de cylindre (412) et l'autre est située au niveau de la coiffe de cylindre (413) du cylindre d'huile (410) ; ou la première et la deuxième ouverture d'huile (414, 415) sont situées au niveau de la paroi de cylindre (412).

10. Dispositif de commande hydraulique selon la revendication 1, **caractérisé en ce que** le dispositif d'entraînement (5, 40, 430) comprend en outre : un moteur électrique (5a, 431) ainsi qu'un dispositif à broche filetée (5c, 433) qui est utilisé pour convertir le mouvement de rotation produit par le moteur électrique (5a, 431) en un mouvement linéaire, le dispositif à broche filetée (5c, 433) comprenant une broche filetée (433a) et une bague extérieure (433b) posée sur la broche filetée (433a), le moteur électrique (5a, 431) entraînant en rotation la bague extérieure (433b) et la broche filetée (433a) étant connectée fixement au premier piston (420).

11. Dispositif de commande hydraulique selon la revendication 10, **caractérisé en ce que** le dispositif d'entraînement (5, 40, 430) comprend en outre un réducteur (432) qui est accouplé à l'arbre de sortie du moteur électrique (5a, 431), et le moteur électrique (5a, 431) entraîne en rotation la bague extérieure (433b) par le biais du réducteur (432).

12. Dispositif de commande hydraulique selon la revendication 10, **caractérisé en ce que** l'unité de commande (5b, 441), en fonction de la vitesse de rotation du moteur électrique (5a, 431), commande la distance de déplacement du premier piston (420) .

13. Dispositif de commande hydraulique selon l'une quelconque des revendications 1 à 12, **caractérisé en ce que** le dispositif de commande hydraulique est un dispositif d'actionnement d'embrayage.

14. Dispositif de commande hydraulique selon l'une quelconque des revendications 1 à 12, **caractérisé en ce que** le dispositif de commande hydraulique est un dispositif de commande de freinage d'un véhicule.

15. Système d'embrayage, **caractérisé en ce qu'**il comprend :
un embrayage (C) ;
un dispositif de commande hydraulique selon la revendication 13, qui sert à commander le débrayage ou la fermeture de l'embrayage (C).

16. Système de freinage de véhicule, **caractérisé en ce qu'**il comprend : un dispositif de commande hydraulique selon la revendication 14.
